# EUROPEAN PATENT APPLICATION

(11) **EP 3 845 337 A1**
(43) Date of publication of application: **07.07.2021**
(21) Application number: 20214762.5
(22) Date of filing: 16.12.2020
(51) Int. Cl.: B22F 10/60, B22F 10/62, B22F 10/64, B22F 5/10, B22F 10/43, C25F 3/02, B33Y 30/00, B33Y 40/20, B22F 12/82, B22F 5/00, B22F 5/04

(54) **SYSTEMS AND METHODS FOR ADDITIVE MANUFACTURING SUPPORT REMOVAL AND SURFACE FINISH ENHANCEMENT**

(30) Priority: 30.12.2019 US 201916730451
(71) Applicant: Honeywell International Inc., Charlotte, NC 28202 (US)
(72) Inventor: PIASCIK, James, Charlotte, NC North Carolina 28202 (US); JADIDIAN, Bahram, Charlotte, NC North Carolina 28202 (US); CHIPKO, Paul, Charlotte, NC North Carolina 28202 (US)
(74) Representative: LKGlobal UK Ltd.

(57) **Abstract**

Systems and methods for additive manufacturing support removal of an additive manufactured component are provided. The method includes additively manufacturing a built component including at least one support having a thickness, and gaseous carburizing the built component and the at least one support to form a carburized component and at least one carburized support. Each of the carburized component and the at least one carburized support have a carburization layer with a predefined depth. The method includes removing the carburization layer to form the component devoid of the at least one carburized support.

## Description

### TECHNICAL FIELD

The present disclosure generally relates to manufactured components, and more particularly relates to systems and methods for additive manufacturing support removal and for surface finish enhancement of a manufactured component.

### BACKGROUND

In the manufacture of certain components through additive manufacturing, one or more supports may be used as the component is being built to provide structural integrity during the manufacturing process. Once the component is built by additive manufacturing, the supports are typically removed prior to finalizing the component as the supports do not generally form a part of the finished component. In certain instances, due to the shape of the component, the supports may be contained within a blind cavity or regions that are difficult to access. In these situations, the removal of the supports is time consuming, costly and may require complicated machining techniques to separate the supports from the component.

Moreover, the formation of the component through additive manufacturing or other manufacturing processes may result in rough surfaces, due to the nature of the manufacturing process. In addition, in certain manufactured components, such as components cast with internal channels, the rough surfaces may cause debris or fine particles to accumulate within the internal channels during use. In certain instances, the manufactured component may undergo additional machining processes to smooth the rough surfaces. These additional machining processes may be time consuming and costly.

Accordingly, it is desirable to provide a system and method for removing supports from an additively manufactured component, which also provides surface finish enhancement during the same process. By removing the supports in the same process as the surface finish is enhanced, the manufacturing time for the component is reduced and manufacturing costs may be reduced. Further, it is desirable to provide a system and method for removing supports from an additively manufactured component, which reduces the need for complicated machining processes. In addition, it is desirable to provide a system and a method that enhances surface finish of manufactured components, such as cast components. Furthermore, other desirable features and characteristics of the present invention will become apparent from the subsequent detailed description and the appended claims, taken in conjunction with the accompanying drawings and the foregoing technical field and background.

### SUMMARY

According to various embodiments, provided is a method for additive manufacturing support removal of an additive manufactured component. The method includes additively manufacturing a built component including at least one support having a thickness, and gaseous carburizing the built component and the at least one support to form a carburized component and at least one carburized support. Each of the carburized component and the at least one carburized support have a carburization layer with a predefined depth. The method includes removing the carburization layer to form the component devoid of the at least one carburized support.

The removing the carburization layer to form the component further includes etching the carburization layer in an etch system to remove the carburization layer and form the component devoid of the at least one carburized support. The etching the carburization layer in the etch system, further includes etching the carburization layer in an anodic etch system to form the component devoid of the at least one carburized support. The method also includes inserting a conformal cathode electrode into at least one of the carburized component and the at least one carburized support prior to the etching. The predefined depth is greater than the thickness of a rib associated with the at least one support. The additively manufacturing the built component further includes additively manufacturing a built component composed of at least 10% by weight chromium. The carburizing the built component and the at least one support to form the carburized component and the at least one carburized support further includes heating the built component and the at least one support in a carburization furnace that includes a carbon-containing gas at a temperature between 800 degrees Celsius to 1150 degrees Celsius to form the carburization layer with the predefined depth. The built component has a first surface finish and the component has a second surface finish that is less than the first surface finish, and the method further includes removing the carburization layer to form the component devoid of the at least one carburized support and with the second surface finish.

Also provided according to various embodiments, is a system for additive manufacturing support removal and for surface finish enhancement of a component. The system includes a source of an additively manufactured built component that includes at least one support, and a gaseous carburization system that carburizes the built component and the at least one support to form a carburized component and at least one carburized support. Each of the carburized component and the at least one carburized support have a carburization layer with a predefined depth. The system includes an etch system that removes the carburization layer to form the component devoid of the at least one carburized support.

The etch system is an anodic etch system that includes an electrolytic bath that receives the carburized component and the at least one support, a cathode electrode and an anode electrode, and the carburized component is the anode electrode. The cathode electrode is a conformal electrode that is insertable into at least one of the carburized component and the at least one carburized support prior to the etching. The conformal electrode includes a cathode electrode wire that is at least partially surrounded by an insulator. The insulator comprises a tube having a plurality of openings that expose the cathode electrode wire within the electrolytic bath. The insulator comprises a plurality of discrete insulators that are spaced apart along a length of the cathode electrode wire. The predefined depth is greater than a thickness of a rib associated with the at least one support. The built component is composed of at least 10% by weight chromium. The built component has a first surface finish and the component has a second surface finish that is less than the first surface finish.

Further provided is a method for surface finish enhancement of a manufactured component. The method includes providing a component that is composed of at least one corrosion resistant element, and the component includes at least one internal passage. The method includes gaseous carburizing the component to form a carburized component, with the carburized component having a carburization layer with a predefined depth. The method includes etching the carburized component in an anodic etch system to remove the carburization layer to enhance a surface finish of the component.

The method further includes inserting a conformal cathode electrode into the carburized component prior to the etching.

### DESCRIPTION OF THE DRAWINGS

The exemplary embodiments will hereinafter be described in conjunction with the following drawing figures, wherein like numerals denote like elements, and wherein:
FIG. 1 is a functional block diagram of a system for additive manufacturing support removal and for surface finish enhancement of an additive manufactured component or cast component in accordance with various embodiments;
FIG. 2 is a perspective view of an exemplary built component formed by an additive manufacturing system, which includes one or more supports;
FIG. 3 is an end view of the built component and the one or more supports of FIG. 2;
FIG. 4 is a photographic image of an end of the built component of FIG. 2, which shows a rough surface topography and surface finish of the built component;
FIG. 5 is a scanning electronic microscope image of a carburized built component formed by additive manufacturing, which shows a carburization layer formed along an exposed surface of the built component;
FIG. 6 is a detail view of carburized supports associated with the carburized component of FIG. 5, in which the carburization layer extends through an entirety of the carburized supports;
FIG. 7 is a detail view of a carburized component that includes one or more access openings for receiving an exemplary conformal electrode;
FIG. 8 is a front view of another exemplary conformal electrode for use with at least one of the carburized component and the carburized supports;
FIG. 9 is a photographic image of an end of a component, which shows the carburization layer removed from the built component and a smooth surface topography or surface finish;
FIG. 10 is a photographic image of the component of FIG. 9, which shows the carburization layer removed and a smooth surface topography or surface finish;
FIG. 11 is an exemplary method for additive manufacturing support removal and for surface finish enhancement of the built component;
FIG. 11A is an exemplary method for surface finish enhancement of the cast component;
FIG. 12 is a photographic image of an end of the carburized built component, which illustrates the carburized support associated with the carburized built component;
FIG. 12A is a photographic image of a cross-section of the carburized support associated with the carburized built component, which illustrates a plurality of ribs associated with the carburized support; and
FIG. 13 is a photographic image of the end of the component, after etching the carburized built component, which illustrates that an etch system has removed the carburized support completely.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description. In addition, those skilled in the art will appreciate that embodiments of the present disclosure may be practiced in conjunction with any type of additively manufactured component that would benefit from having internal and/or external supports removed while enhancing surface finish, and the components described herein for a gas turbine engine are merely one exemplary embodiment according to the present disclosure. Moreover, the embodiments of the present disclosure may be practiced to improve a surface finish of component manufactured through other techniques, such as a cast component, for example. In addition, while the system and method are each described herein as being used with components for a gas turbine engine onboard a vehicle, such as a bus, motorcycle, train, motor vehicle, marine vessel, aircraft, rotorcraft and the like, the various teachings of the present disclosure can be used with a gas turbine engine on a stationary platform. Further, it should be noted that many alternative or additional functional relationships or physical connections may be present in an embodiment of the present disclosure. In addition, while the figures shown herein depict an example with certain arrangements of elements, additional intervening elements, devices, features, or components may be present in an actual embodiment. It should also be understood that the drawings are merely illustrative and may not be drawn to scale.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "transverse" denotes an axis that crosses another axis at an angle such that the axis and the other axis are neither substantially perpendicular nor substantially parallel.

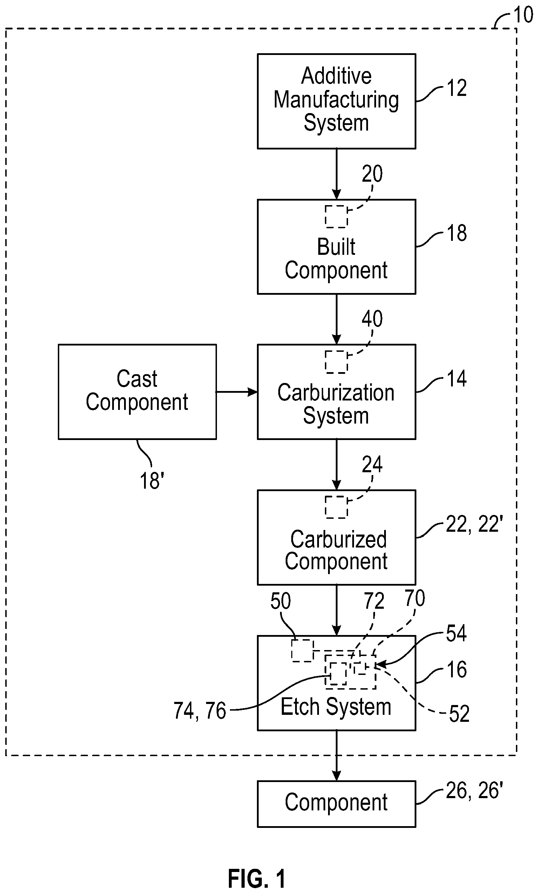

With reference to FIG. 1, a functional block diagram of a system 10 for additive manufacturing support removal and for surface finish enhancement in accordance with various embodiments of the present disclosure. In one example, the system 10 includes an additive manufacturing system 12, a carburization system 14 and an etch system 16. As will be discussed in further detail below, the additive manufacturing system 12 produces, manufactures or builds a built component 18, which has one or more internal and/or external supports 20. The built component 18 is provided or transferred to the carburization system 14. The built component 18 is carburized in the carburization system 14 to form a carburized built component or carburized component 22 and the one or more internal and/or external supports are also carburized to form carburized supports 24. Each of the carburized component 22 and the carburized supports 24 have a carburization layer formed along any exposed internal and external surfaces. Generally, the depth of carburization associated with the carburized supports 24 is such that the carburization layer extends through an entirety of each of the carburized supports 24. The carburized component 22, including the carburized supports 24, is provided or transferred to the etch system 16. The etch system 16 removes the carburization layer, which results in a removal of the carburized supports 24 to form a resulting component 26. Moreover, the removal of the carburization layer enhances a surface finish of the component 26. In one example, the surface finish of the component 26 is improved by about 53% when compared to a surface finish of the built component 18. Thus, the system 10 enables substantially simultaneously the removal of the one or more supports 20 and the enhancement of the surface finish, without requiring additional manufacturing, which reduces cost and time. As used herein, the component 26 is a component produced by additive manufacturing that is devoid of the one or more internal and/or external supports 20.

It should be noted that alternatively, the system 10 may be used with cast components, such as components formed through investment casting, etc. For example, a component associated with a gas turbine engine, such as a turbine blade, which may be cast from a metal or metal alloy. In this example, a component 18' is cast by investment casting, for example, and may include internal cooling channels or passages. The internal cooling cavities or passages of the cast component 18' may have undesirable high surface roughness, which may result in debris, such as dust or fine particles, becoming attached to or clogging the internal cooling channels or passages. The cast component 18' may be transferred to the carburization system 14 and carburized to form a carburized component 22'. The depth of carburization associated with the carburized component 22' is such that the carburization layer extends through a portion of the exposed internal and external surfaces of the cast component 18'. The carburized component 22' is provided or transferred to the etch system 16. The etch system 16 removes the carburization layer, which results in a removal of the rough surface within the internal cooling channels or passages to form a resulting component 26' with enhanced surface finish. In one example, the surface finish of the component 26' is also improved by about 53% when compared to a surface finish of the cast component 18', which reduces the likelihood of debris, such as dust or fine particles, from adhering to the internal cooling channels or passages. As used herein, the component 26' is a component produced by casting that has an improved surface finish over the cast component 18'.

With continued reference to FIG. 1, the additive manufacturing system 12 is any system that is capable of creating, manufacturing or building a three-dimensional part, such as the built component 18. In one example, the additive manufacturing system 12 is a direct metal laser sintered (DMLS) system. DMLS is a commercially available laser-based rapid prototyping and tooling process by which complex parts may be directly produced by precision melting and solidification of metal powder into successive layers of larger structures, each layer corresponding to a cross-sectional layer of the 3D component. It should be noted that although the description herein refers to DMLS as the additive manufacturing system 12, it should be noted that in other embodiments, the additive manufacturing system 12 may comprise micro-pen deposition in which liquid media is dispensed with precision at the pen tip and then cured; selective laser sintering in which a laser is used to sinter a powder media in precisely controlled locations; laser wire deposition in which a wire feedstock is melted by a laser and then deposited and solidified in precise locations to build the product; electron beam melting; laser engineered net shaping; and direct metal deposition.

In the example of DMLS, as is generally known, in order to produce the built component 18, a model, such as a design model, of the component may be defined in any suitable manner. For example, the model may be designed with computer aided design (CAD) software and may include three-dimensional ("3D") numeric coordinates of the entire configuration of the turbine engine component including both external and internal surfaces. In one exemplary embodiment, the model may include a number of successive two-dimensional ("2D") cross-sectional slices that together form the 3D component. The model of the component may include one or more supports to provide structural stability during the formation of the component. As is generally known, the speed, position, and other operating parameters of a laser beam of the additive manufacturing system 12 are controlled to selectively fuse the powder of a build material into larger structures by rapidly melting the powder particles that may melt or diffuse into the solid structure below, and subsequently, cool and re-solidify. As such, based on the control of the laser beam, each layer of build material may include unfused and fused build material that respectively corresponds to the cross-sectional passages and walls that form the built component 18.

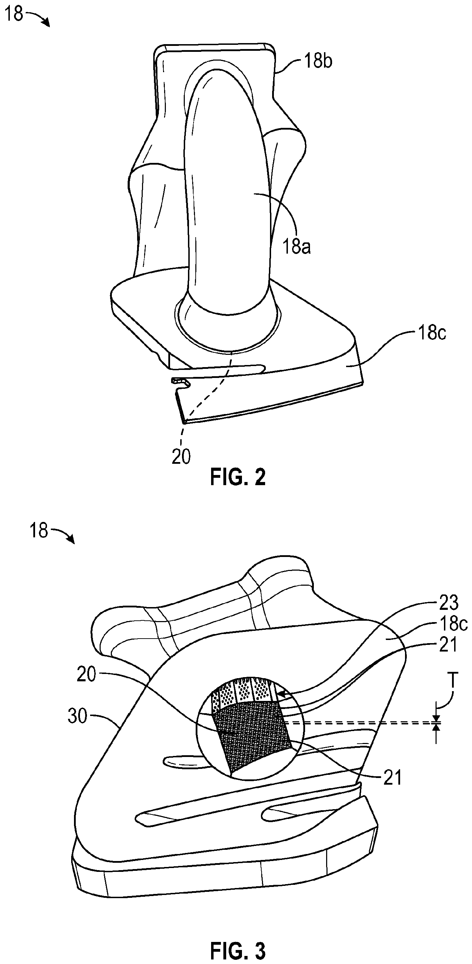

Upon completion of a respective layer, a roller or wiper pushes a portion of a build material from a delivery device to form an additional layer of build material on a working plane of the fabrication device. The laser beam is movably supported relative to the component and is again controlled to selectively form another cross-sectional layer. In this example, as the laser forms the cross-sectional layers, the laser forms the supports 20. The supports 20 may be used to provide stability to curved or arcuate features of the component during the building of the component layer-by-layer. For example, with reference to FIG. 2, an example of the built component 18 and the supports 20 (FIG. 3) is shown. In this example, the built component 18 is an arcuate tubular component for use with a gas turbine engine. The built component 18 includes an arched hollow tube 18a and opposed mounting brackets 18b, 18c. It should be noted that the built component 18 may also include other components associated with a gas turbine engine, including, but not limited to, turbine blades, stator blades, fan blades, combustor liners, combustion chambers, housings, injectors, etc.

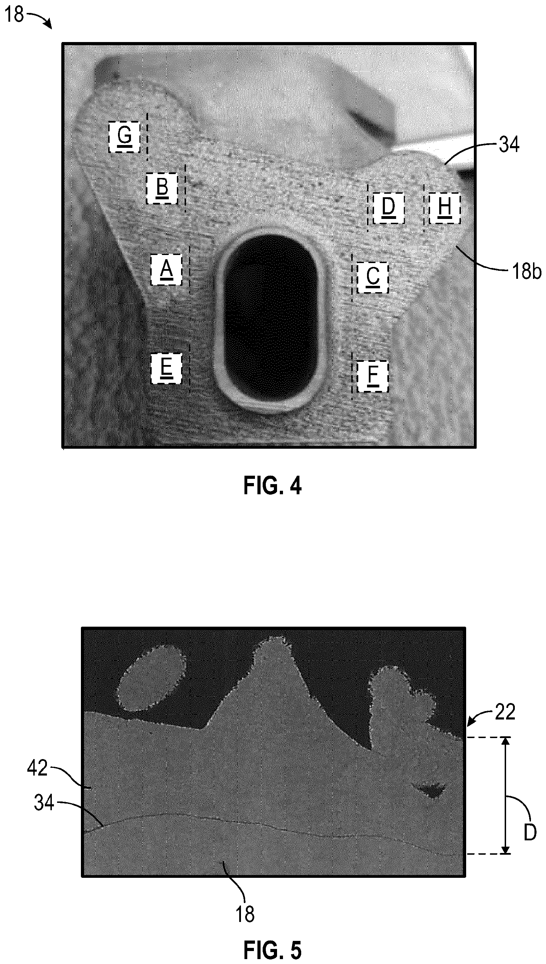

As shown in FIGS. 3 and 4, the built component 18 is integrally formed with the supports 20. In this example, the supports 20 enable the formation of the arched hollow tube 18a of the built component 18, by supporting the arched hollow tube 18a (FIG. 2) as each layer is built. The supports 20 are integrally formed with the built component 18 along an interface 30 (FIG. 3) by the additive manufacturing system 12 (FIG. 1). As will be discussed, the system 10 enables the removal of the supports 20 at the interface 30 such that the supports 20 are separated from the interface 30 without requiring machining along the interface 30. As shown in FIG. 3, in one example, the supports 20 may have a honeycomb structure 23, which is built during the manufacture of the built component 18. Thus, in one example, the supports 20 may comprise one or more ribs 21, which are arranged to form the honeycomb structure 23 to support the manufacture of the built component 18. Generally, each rib 21 of the supports 20 have a thickness T of about 100 micrometers to about 200 micrometers (about 4 mils to about 8 mils). It should be noted that in other embodiments, the supports 20 may have a different shape, thickness or structure to support the particular component during additive manufacturing.

Generally, the built component 18, and the supports 20, are composed of the same material, which in this example is a metal or metal alloy. In one example, the built component 18 and the supports 20 are composed of a metal or metal alloy containing chromium, including, but not limited to, Inconel 718, stainless steels, Inconel 625, Inconel 600, Rene 41, MA760, Nimonic 80A, Nimonic 105, Udimet 500, Udimet 700, Waspaloy, Rene 2000, MA760, MA758, FT750DC, Hastalloy X. Generally, the chromium concentration in the metal alloy is at least 10% by weight chromium. For example, Inconel 718 has between about 17%-21% by weight chromium, and stainless steel 316 has about 16%-18% by weight chromium. It should be noted that in certain instances, the built component 18 and the supports 20 may have a weight percentage of chromium, which is less than about 10%. With reference to FIG. 4, a photographic image of the mounting bracket 18b of the built component 18 is shown. As shown, the built component 18 has an external surface 34. The external surface 34 has a rough topography or surface finish due to the formation of the built component 18 by the additive manufacturing system 12. In one example, the surface finish (Ra) of the built component 18 is between about 400 to about 800 microinches (µin.).

For example, the surface finish (Ra) of location A is about 392 microinches (µin.); the surface finish (Ra) of location B is about 337 microinches (µin.); the surface finish (Ra) of location C is about 323 microinches (µin.); the surface finish (Ra) of location D is about 429 microinches (µin.); the surface finish (Ra) of location E is about 473 microinches (µin.); the surface finish (Ra) of location F is about 496 microinches (µin.); the surface finish (Ra) of location G is about 353 microinches (µin.); and the surface finish (Ra) of location H is about 404 microinches (µin.). In this example, the average surface finish (Ra) is about 401 microinches (µin.).

With reference back to FIG. 1, the built component 18, including the supports 20 attached to the interface 30 (FIG. 3), is provided or transferred to the carburization system 14. Generally, the built component 18 may be transferred from the additive manufacturing system 12 to the carburization system 14 through any suitable technique, including, but not limited to, conveyer belt, robotic transfer, pallets, etc.

In the example of the cast component 18', the cast component 18' is formed via investment casting, for example, from a metal or metal alloy. In one example, the cast component 18' is composed of a metal or metal alloy containing one or more corrosion resistant elements, including, but not limited to, single crystal super alloys, such as MAR-M247, NASAIR 100, CZMX-2, AMI, CMSX-4, CMSX-10, MC544, MC534, TMS-162, TMS-238, CMZX-8, CMSX-4 Plus. In the example of the cast component 18' comprising MAR-M247, the corrosion resistant elements comprise chromium, molybdenum and tungsten. The cast component 18' is provided or transferred to the carburization system 14. Generally, the cast component 18' may be transferred to the carburization system 14 through any suitable technique, including, but not limited to, conveyer belt, robotic transfer, pallets, etc.

The carburization system 14 heats the built component 18, including the supports 20 or the cast component 18', in the presence of at least one carbon containing gas to form a layer of carburization on the internal and external surfaces of the built component 18 and the supports 20, or the internal and external surfaces of the cast component 18'. In one example, the carburization system 14 includes a carburization furnace 40. The carburization furnace 40 heats the built component 18 and the supports 20, or the cast component 18', at a temperature between about 800 degrees Celsius to about 1150 degrees Celsius in the presence of at least one a carbon containing gas. In this example, the carburization furnace 40 is a methane carburization furnace, which heats the built component 18 and the supports 20, or the cast component 18', to a temperature between about 950 degrees Celsius to about 1050 degrees Celsius, in a mixture of hydrogen, methane, argon and nitrogen gases. The heating of the built component 18 and the supports 20, in the carbon containing gas, such as methane, reacts with the chromium to form a layer containing chromium carbide and the base metallic composition or the carburization layer 42 along the exposed surfaces (internal and external) to form the carburized component 22 and the carburized supports 24, including carburized ribs 25 of the carburized support 24. The heating of the cast component 18' in the carbon containing gas, such as methane, reacts with the chromium, the tungsten and molybdenum to form a layer containing chromium carbide, tungsten carbide, molybdenum carbide and the base metallic composition or a carburization layer 42' along the exposed surfaces (internal and external) to form the carburized component 22'.

In one example, the heating of the built component 18 and the supports 20, or the cast component 18', is performed at a temperature of about 1050 degrees Celsius for about 2 hours to about 8 hours in a mixture of hydrogen, methane and argon (H₂-CH₄-Ar) gas, a mixture of argon methane (Ar-CH₄) gas and hydrogen methane (H₂-CH₄) gas or a mixture of hydrogen, methane and nitrogen (H₂-CH₄-N₂) gas to result in a carburization depth of about 200 micrometers. A volumetric flow rate of the carburization gas in the carburization furnace 40 may be about one liter (L) per minute (min). It should be noted that other carbon containing gases may be employed with the carburization furnace 40 to carburize the built component 18 and the supports 20, or the cast component 18', including, but not limited to, ethylene, ethane, etc. In addition, it should be noted that the carburization of the built component 18 or the cast component 18' by the carburization system 14 may take place in two runs, or that the carburization may be accomplished in a single run to achieve the same results. In addition, it should be noted that the length of time for the carburization of the built component 18 may be reduced based on the geometry of the supports 20. For example, if the wall thickness in the support 20 is reduced, less carburization is needed to reach the desired depth of carburization to remove the supports 20.

For example, with reference to FIG. 5, a scanning electronic microscope image of the carburized component 22 is shown. As shown, the carburized component 22 has a carburization layer 42 over the external surface 34 of the built component 18, which is a layer containing chromium carbide. At and below the external surface 34, the built component 18 is composed of the base material, which in this example is Inconel 718. The carburization layer 42 is formed along the exposed surfaces (internal and external) of the carburized component 22, including the carburized ribs 25 of the carburized supports 24. The carburization layer 42 has a predefined depth D based on the length of the treatment of the built component 18 in the carburization furnace 40. In one example, the predefined depth D is about 200 micrometers. It should be noted that the carburization system 14 can be controlled, through time duration, for example, to ensure that the depth of the carburization layer 42 reaches the predefined depth D for the exposed surfaces (internal and external) of the built component 18 and supports 20.

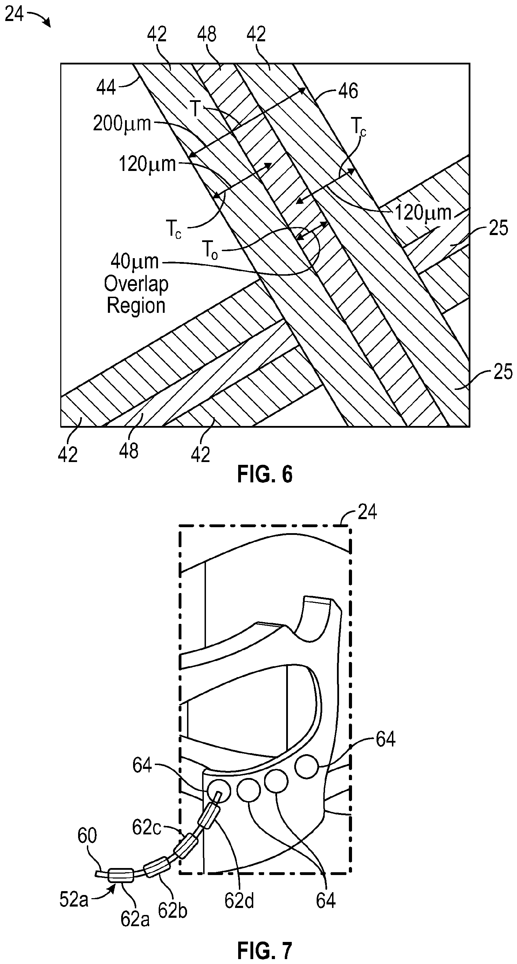

As a further example, with reference to FIG. 6, a pair of the carburized ribs 25 of the carburized supports 24 is shown. In this example, each of the carburized ribs 25 of the carburized support 24 has the thickness T of about 200 micrometers. The carburized support 24 has a first surface 44 opposite a second surface 46. Each of the first surface 44 and the second surface 46 are external surfaces, which are exposed to the carbon containing gas in the carburization furnace 40. As shown in FIG. 6, the carburization layer 42 extends through the first surface 44 and the second surface 46 by about 120 micrometers (Tc), which results in an overlap region 48 (To) of about 40 micrometers. Stated another way, due to the thickness T of each carburized rib 25 of the carburized support 24 as less than the predefined depth D, the carburization layer 42 extends through an entirety of the carburized support 24. This enables the removal of the carburized support 24 without machining by the etch system 16.

Once the carburized component 22 has undergone the carburization process such that the carburization layer 42 is formed to the predefined depth D, such as about 200 micrometers, on the carburized component 22 and the carburized supports 24, the carburized component 22, including the carburized supports 24, is provided or transferred to the etch system 16. Similarly, once the carburized component 22' has undergone the carburization process such that the carburization layer 42' is formed to the predefined depth D, such as about 200 micrometers, on the carburized component 22', the carburized component 22' is provided or transferred to the etch system 16. Generally, with reference back to FIG. 1, the carburized component 22, 22' may be transferred from the carburization system 14 to the etch system 16 through any suitable technique, including, but not limited to, conveyer belt, robotic transfer, pallets, etc. It should be noted that in certain embodiments, the carburization system 14 may be combined with annealing such that the built component 18, or the cast component 18', is carburized and annealed simultaneously in the carburization furnace 40, which eliminates the need for a separate annealing step during the manufacture of the component 26. This reduces manufacturing time, cost and complexity.

The etch system 16 removes the carburization layer 42 (FIGS. 5 and 6) from the carburized component 22 and carburized support 24 to form the component 26; and removes the carburization layer 42' from the carburized component 22' to form the component 26'. In one example, the etch system 16 is an anodic electrolytic etch system. It should be noted that in other embodiments, the etch system 16 may comprise a chemical etch system, or a voltaic cell etch system. In the example of a voltaic cell etch system, graphite may be used to form the voltaic cell, and small graphite spheres may be introduced into narrow channels, such as narrow internal channels within the carburized component 22 and/or carburized supports 24, or the carburized component 22', to accelerate the etch rate in blind regions.

In this example, the etch system 16 includes a source of direct current 50, a cathode electrode or cathode 52 and an electrolytic bath 54. The source of direct current 50 may comprise any suitable source, including, but not limited to a battery, a direct current power supply, a direct current generator, etc. In one example, the source of direct current 50 supplies a voltage of about 500 millivolts (mV) to about 800 millivolts (mV), and a current of about 5 milliamps (ma) to about 300 milliamps (ma). The source of direct current 50 is electrically coupled to the cathode 52 and to the carburized component 22 and/or carburized supports 24. Thus, in this example, the carburized component 22 and/or carburized supports 24 form the anode electrode. In the example of the carburized component 22', the source of direct current 50 is electrically coupled to the cathode 52 and to the carburized component 22' such that the carburized component 22' forms the anode electrode.

The source of direct current 50 may be electrically coupled to the cathode 52 and the carburized component 22, 22' via any suitable technique, including, but not limited to, conductive wire, conductive clips, conductive plates, conductive foil, etc. The conductive wire, conductive clips, conductive plates and conductive foil may be composed of any suitable conductive material, including, but not limited to, stainless steel, superalloy (including, but not limited to, Inconel alloys, Hastalloys, Haynes Alloy 214, etc.), nichrome, etc. In one example, the source of direct current 50 is electrically coupled to a surface of the carburized component 22 and/or carburized supports 24, or to the carburized component 22'. It should be noted that as the voltage applied to the carburized component 22 and/or carburized supports 24, or the carburized component 22', is controlled, the current level may be dependent upon a surface area of the carburized component 22 and carburized supports 24 or a surface area of the carburized component 22', a distance between the anode and cathode electrodes, a temperature of the plating bath, a conductivity of the plating bath and other factors.

In this example, the voltage applied to the anode electrode (the carburized component 22 and/or carburized supports 24 or the carburized component 22') and the cathode electrode is controlled. In this example, the voltage is controlled to maintain the voltage at precise voltages, such as a voltage less than about 1.0 volts (V). At low voltages, the etching is selective and only the carburized layer is etched. At voltages above 1.0 volts (V), in certain instances, the uncarburized metal or metal alloy of the carburized component 22 and/or carburized supports 24, or the carburized component 22', may be etched, which is undesirable. In addition, the low voltage results in less oxide being formed on the anode electrode. In one example, an initial or starting voltage of 0.8 volts (V) is applied until no current flows at 0.8 volts (V). Then, the voltage was reduced in 0.1 volt (V) increments over a period to time, for example 70 hours, until no current flows at 0.1 volts (V). At each voltage increment (0.8 volts (V), 0.7 volts (V), 0.6 volts (V), etc. to 0.1 volts (V)), the voltage is applied at that particular voltage until no current flows and the etch process self-terminates. Upon self-termination at the particular voltage, the voltage is reduced by the next 0.1 voltage (V) increment, until 0.1 volts (V) is applied and no current flows at 0.1 volts (V). By incrementally reducing the applied voltage after self-termination at a particular voltage until the etching self terminates at 0.1 volts (V), additional etching of the carburized component 22 and/or carburized supports 24, or the carburized component 22', is achieved, which ensures removal of the carburization layer 42, 42'. Stated another way, the gradual reduction in the applied voltage to the cathode and the anode ensures a substantially complete removal of the carburization layer 42, 42'(less than about 7% of the carburization layer 42, 42' remaining). By applying the voltage incrementally, the etching continues without passivating until a high chromium concentration is reached, which is at the surface of the component 26, 26'. By incrementally decreasing voltage, the etch system 16 etches more deeply into the carburization layer 42, 42'. Generally, as the etching progresses through the carburization layer 42, 42', the amount of free chromium increases. The anodic potential oxidizes (passivates) the chromium in the carburized component 22, or carburized component 22', until a high chromium concentration is reached at which point the etching self terminates.

The cathode 52 is positioned within the electrolytic bath 54 so as to be spaced apart from the carburized component 22 and carburized supports 24 or the carburized component 24'. The cathode 52 may have any desired shape to facilitate the etching of the carburized component 22 and carburized supports 24, or the carburized component 24'. In one example, the cathode 52 may comprise a flat plate, a ring or may be conformal to the shape of the carburized component 22 and carburized supports 24, or the carburized component 24'. In the example of a flat plate or ring, the cathode 52 may be composed of a suitable metal or metal alloy, including, but not limited to a Haynes Alloy 214, which may be stamped, cast, forged, etc. In the example of a conformal cathode, with reference to FIG. 7, an exemplary conformal cathode 52a is shown. The conformal cathode 52a may be configured to adapt to the shape of the carburized component 22 and/or carburized supports 24, or the carburized component 22', and in one example, may be positionable within internal cavities, internal chambers, internal channels, etc. of the carburized component 22 and/or carburized supports 24, or the carburized component 24', to increase a rate of etching of the carburized component 22 and/or carburized supports 24, or the carburized component 22'. For example, the conformal cathode 52a may be positioned within the arched hollow tube 18a of the built component 18 after carburization of the built component 18.

The conformal cathode 52a includes a cathode electrode wire or cathode wire 60 and at least one insulator 62. The cathode wire 60 comprises any suitable electrically conductive wire, including, but not limited to, a Haynes Alloy 214 wire, etc. In this example, the at least one insulator 62 comprises a plurality of insulators 62a-62d, which are spaced apart along a length of the cathode wire 60. Generally, each of the plurality of insulators 62a-62d have a thickness that inhibits or prevents the contact between the cathode wire 60 and the carburized component 22 and/or carburized supports 24, or the carburized component 22'. Thus, the insulators 62a-62d ensure that the cathode wire 60 remains spaced apart from the carburized component 22 and/or carburized supports 24, or the carburized support 22', during the insertion of the conformal cathode 52a into the carburized component 22 and/or carburized supports 24, or the carburized component 22'. Each of the insulators 62a-62d are composed of a suitable electrically insulating material, including, but not limited to, a polymer-based material, Tygon®, etc. Tygon® is commercially available from Saint-Gobain Corporation of Malvern, Pennsylvania. In this example, the carburized component 22 is shown with one or more access openings 64 for insertion of the conformal cathode 52a; however, it should be understood that the carburized component 22 and/or carburized supports 24 may be built, through the additive manufacturing system 12 (FIG. 1), to include access openings to facilitate the placement of the conformal cathode 52a within the carburized component 22 and/or carburized supports 24. The carburized component 22' may also be cast with openings for the insertion of the conformal cathode 52a. By using the conformal cathode 52a, the cathode 52 may be placed closer to the anode (the carburized component 22 and/or carburized supports 24, or the carburized component 24'), which reduces time or speeds up the etching of the carburized component 22 and/or carburized supports 24, or the carburized component 22', by the etch system 16.

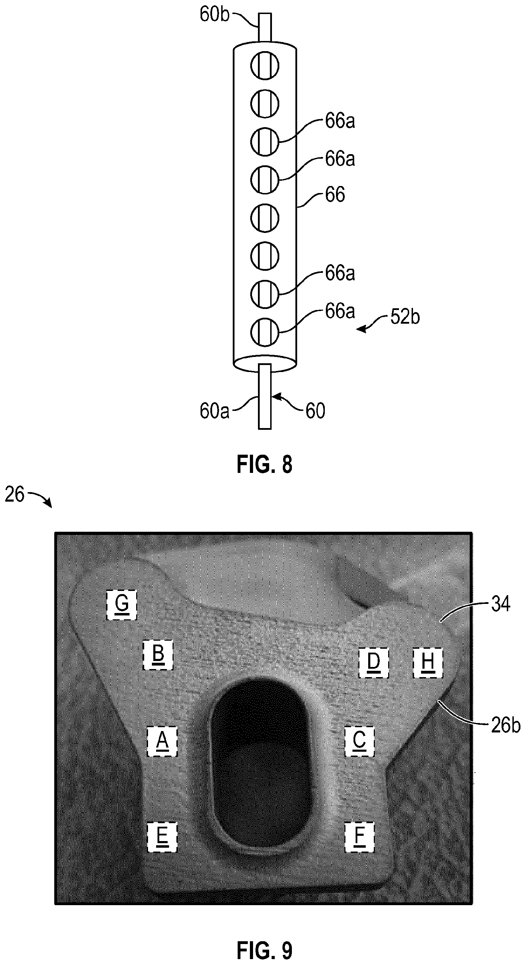

It should be noted that while the conformal cathode 52a is shown herein as comprising a plurality of separate and discrete insulators 62a-62d, the conformal cathode 52a may be constructed differently to insulate the cathode wire 60 during insertion into the carburized component 22 and/or carburized supports 24, or the carburized component 22'. For example, with reference to FIG. 8, another exemplary conformal cathode 52b is shown. In this example, the cathode wire 60 is surrounded by a single insulator 66. The insulator 66 has a plurality of openings 66a, which enable the cathode wire 60 to be exposed to the electrolytic solution 72 within the carburized component 22 and/or carburized supports 24, or the carburized component 22'. It should be noted that the openings 66a illustrated herein are merely exemplary, as the openings 66a may have any desired shape, location and pattern, which exposes the cathode wire 60 while insulating the cathode wire 60 from the carburized component 22 and/or carburized supports 24, or the carburized component 22'. Generally, the insulator 66 is positioned about the cathode wire 60 between ends 60a, 60b of the cathode wire 60. The insulator 66 is composed of a suitable electrically insulating material, including, but not limited to, a polymer-based material, Tygon®, etc., and may be cylindrical to fit over the cathode wire 60.

In addition, it should be noted that while the conformal cathode 52a is shown herein as comprising a plurality of separate and discrete insulators 62a-62d, the conformal cathode 52a may be constructed differently to insulate the cathode wire 60 during insertion into the carburized component 22 and/or carburized supports 24, or the carburized component 22'. For example, the conformal cathode 52a may include a plurality of separate and discrete insulators that extend outwardly from the cathode wire 60 like a bristle on a brush, such that the insulators support and center the cathode wire 60 within a tube or cavity of the carburized component 22 and/or carburized supports 24, or the carburized component 22', while inhibiting a shorting between the cathode wire 60 and the carburized component 22 and/or carburized supports 24, or the carburized component 22'. Thus, in this example, the conformal cathode 52a is in the form of a test tube brush, in which the cathode wire 60 extends along a body of the conformal cathode 52a, and the insulators extend outwardly away, like bristles, about the cathode wire 60.

With reference to FIG. 1, the electrolytic bath 54 includes a tank 70 and an electrolytic solution 72. The tank 70 is any suitable vessel for holding the electrolytic solution 72, which may or may not be enclosed with a lid. Thus, generally, the tank 70 has opposing sidewalls and a bottom wall that cooperate to enclose and retain a volume of the electrolytic solution 72. The tank 70 may have any suitable volume capacity, including, but not limited to 5 gallons, etc. The tank 70 may be composed of a polymer-based material, including, but not limited to ethylene tetrafluoroethylene. In certain embodiments, the tank 70 includes a heater, and a float sensor. The heater provides a source of thermal energy to the electrolytic solution, and in one example, the temperature of the electrolytic bath 54 is about 23 degrees Celsius. The float sensor observes a level of electrolytic solution 72 within the tank 70 and may output one or more sensor signals based on the observation. A controller having a control module, including a processor and computer-readable storage media, may process the sensor signals and output a notification (audible, visual or other) to indicate that a level of the electrolytic solution 72 is below a predefined threshold level. In addition, the tank 70 may be in fluid communication with an electrolytic solution reservoir, which may replenish the tank 70 based on the one or more sensor signals from the float sensor. The tank 70 may also include a flow distributor to distribute a flow of the electrolytic solution 72 from the reservoir tank.

In certain embodiments, the tank 70 may include a filter 74 and/or an agitator 76. The filter 74 and the agitator 76 may be combined into a single unit, and at least partially inserted into the tank 70. The filter 74 may remove particles from the electrolytic solution 72, and the agitator 76 may stir the electrolytic solution 72 to enhance the etching of the carburized component 22 and/or carburized supports 24, or the carburized component 22'.

The electrolytic solution 72 drives the etching of the carburized component 22 and/or carburized supports 24, or the carburized component 22', and is contained within the tank 70. In one example, the electrolytic solution 72 is composed of potassium chloride (KCL), nitric acid (HNO₃), tartaric acid, citric acid, sodium citrate acid and combinations thereof. In one example, the electrolytic solution 72 comprises about 0.10 molar potassium chloride to about 0.60 molar potassium chloride and about 0.050 molar nitric acid to about 0.20 molar nitric acid dissolved in water. In another example, the electrolytic solution 72 may include organic acids, such as sodium citrate acid, citric acid or tartaric acid, which may have a concentration of about 0.1 molar organic acid to about 1.0 molar organic acid dissolved in water. The cathode 52 and the carburized component 22 and/or carburized supports 24, or the carburized component 22', are positioned within the tank 70 so as to be immersed within the electrolytic solution 72. In one example, the electrolytic solution 72 has a pH of about 0.5 to about 9.0, and in the example of the electrolytic solution 72 including nitric acid, the pH is about 0.5 to about 1.0. In the example of sodium citrate acid, the pH may be neutral. Generally, the electrolytic solution 72 may electroplate or regenerate deposits on the cathode 52 (electrowinning), which may prolong the life of the cathode 52. In addition, the electrolytic solution 72 is environmentally friendly and lasts for a longer duration given the regenerative nature of the electrolytic solution 72.

Once the carburized component 22 and/or carburized supports 24, or the carburized component 22', are electrically coupled to the source of direct current 50 and the cathode 52 is electrically coupled to the source of direct current 50, the carburized component 22 and/or carburized supports 24, or the carburized component 22', and the cathode 52 are positioned within the electrolytic solution 72 contained within the tank 70. It should be noted that while generally an entirety of the carburized component 22 and carburized supports 24, or the carburized component 22', are submerged within the electrolytic solution 72, a portion of the cathode 52 may be submerged within the electrolytic solution 72. An electrochemical reaction occurs between the cathode 52, anode (carburized component 22 and carburized supports 24 or carburized component 22') and the electrolytic solution 72, which causes the corrosion of the respective carburization layer 42, 42'. The electrochemical reaction continues until the carburization layer 42 is substantially or completely removed to the internal surface and external surface 34 of the built component 18 (FIG. 5) or until the carburization layer 42' is substantially or completely removed to the internal surface and external surface of the cast component 18'.

In this regard, once the base material, Inconel 718 in the example of the carburized component 22 and carburized supports 24 or MAR-M247 in the example of the carburized component 22', is exposed by the etching of the carburization layer 42, 42', the etching terminates as the base material, for example, Inconel 718 or MAR-M247, is corrosion resistant and is not susceptible to etching by the etch system 16. Stated another way, the carburization layer 42 formed on the internal surface and the external surface 34 of the carburized component 22 (FIG. 5) and through the entirety of the carburized supports 24 is a sensitized region that is susceptible to etching by the etch system 16 while the base material, in this example, the Inconel 718, is not susceptible and is corrosion resistant, which enables the etch system 16 to remove the carburization layer 42, including the entirety of the carburized supports 24 to the interface 30 (FIG. 4) and to self-terminate at 0.1 volts (V). Similarly, the carburization layer 42' formed on the internal and external surfaces of the carburized component 22' is a sensitized region that is susceptible to etching by the etch system 16 while the base material, in this example, the MAR-M247, is not susceptible and is corrosion resistant, which enables the etch system 16 to remove the carburization layer 42' and to self-terminate at 0.1 volts (V).

In addition, the removal of the carburization layer 42, 42' by the etch system 16 also improves a surface finish of the resulting component 26, 26'. In this regard, with reference to FIG. 9, a photographic image of a mounting bracket 26b of the component 26 is shown after etching by the etch system 16. It should be understood that the component 26 shown in FIG. 9 is the same built component 18 of FIGS. 2 and 3 after the built component 18 has undergone carburization by the carburization system 14 to form the carburized component 22 and the carburized component 22 has undergone etching by the etch system 16. As shown, the component 26 has the external surface 34 and the carburization layer 42 (FIG. 6) has been removed. After the etching, the external surface 34 has a smooth topography or surface finish due to the removal of the carburization layer 42 by the etch system 16. In one example, the surface finish of the component 26 is between about 130 to about 395 Ra.

For example, the surface finish (Ra) of location A after etching is about 156 microinches (µin.); the surface finish (Ra) of location B after etching is about 189 microinches (µin.); the surface finish (Ra) of location C after etching is about 217 microinches (µin.); the surface finish (Ra) of location D after etching is about 293 microinches (µin.); the surface finish (Ra) of location E after etching is about 146 microinches (µin.); the surface finish (Ra) of location F after etching is about 152 microinches (µin.); the surface finish (Ra) of location G after etching is about 131 microinches (µin.); and the surface finish (Ra) of location H after etching is about 210 microinches (µin.). In this example, the average surface finish (Ra) of the built component 18 after etching is about 187 microinches (µin.). Thus, in this example, the removal of the carburization layer 42 by the etch system 16 reduces the surface finish (Ra) of the built component 18 by about 53%. Accordingly, the built component 18 (FIG. 4) has a first surface finish and the component 26 (FIG. 9) has a second surface finish, with the second surface finish less than the first surface finish.

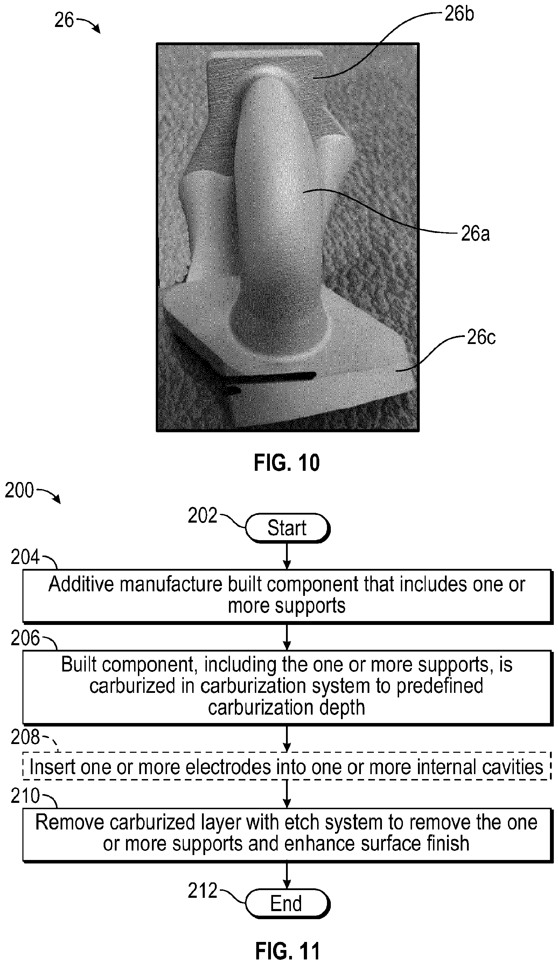

It should be noted that the use of the etch system 16 also facilitates the removal of cling-on or other loose feedstock particles produced during the additive manufacturing of the built component 18. In this regard, as the cling-on or loosely attached particles undergo carburization with the built component 18, due to the particle size of the cling-on or loose feedstock particles, the cling-on or loosely attached particles become carburized substantially throughout an entirety of the cling-on or loose feedstock particle. As the cling-on or loosely attached particle is carburized substantially completely, the etching of the carburized component 22 removes the cling on or loosely attached particles. The removal of the cling-on or loosely attached particles eliminates the need for additional machining of the component 26 to remove these types of particles. With reference to FIG. 10, a photographic image shows the component 26 after etching by the etch system 16. The reduction in surface roughness of the component 26 after etching is visible to the eye, and as shown, no additional machining is necessary to remove loose feedstock particles.

Once the etching of the carburized component 22 and the carburized supports 24 by the etch system 16 has self-terminated, the component 26, with the supports completely removed, is available for further processing. For example, the removal of the carburization layer 42 along with the carburized supports 24 enables the component 26 to undergo electropolishing after etching. Given the surface finish improvement provided by the etch system 16, electropolishing the component 26 may result in a mirror finish for the component 26 without requiring additional machining or processing steps. Similarly, Once the etching of the carburized component 22' by the etch system 16 has self-terminated, the component 26' is also available for further processing.

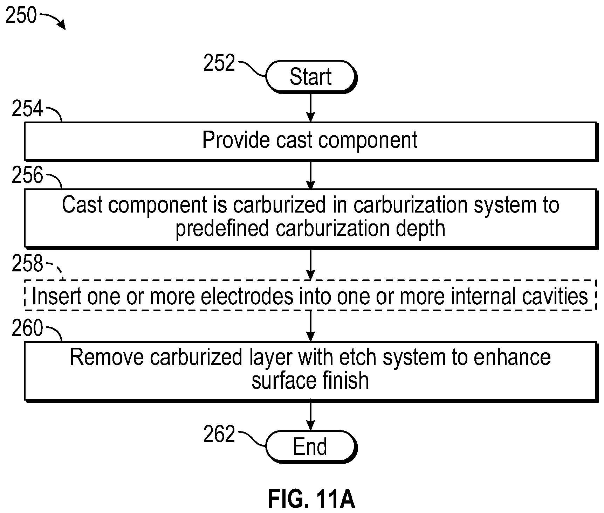

It should be noted that the system 10 and method 200, 250 (FIG. 11, 11A) removes a very consistent depth of material across the component 26, 26' because the depth is controlled by gaseous diffusion or the carburization. Other techniques, such as electropolishing and electroplating, generally do not remove material as uniformly, which makes it difficult to maintain dimensional tolerances. Since the system 10 and method 200, 250 (FIG. 11, 11A) reduce the surface finish in half, much less electropolishing is required and dimensions are better controlled. In addition to electropolish, mechanical processes such as wire brushing or tumbling in burnishing media, etc. may further reduce surface finish. It should be noted that these techniques are more applicable to outer exposed areas. Thus, the system 10 and method 200, 250 (FIG. 11, 11A) reduce manufacturing processes, cost and complexity. In addition, the component 26 may undergo hot isostatic pressing (HIP) after etching.

In one example, with reference to FIG. 11 and additional reference to FIG. 1, a flowchart illustrates a method 200 that can be performed for additive manufacturing support removal and for surface finish enhancement of an additive manufactured component in accordance with the present disclosure. As can be appreciated in light of the disclosure, the order of operation within the method is not limited to the sequential execution as illustrated in FIG. 11, but may be performed in one or more varying orders as applicable and in accordance with the present disclosure.

The method begins at 202. At 204, the additive manufacturing system 12 builds the built component 18 to include the one or more supports 20. At 206, the built component 18 is carburized in the carburization system 14 to form the carburization layer 42 on the exposed surfaces of the built component 18 and the supports 20 to the predefined depth D. Generally, the built component 18 is carburized to the predefined depth D such that an entirety of the supports 20 are carburized. In one example, the built component 18 and the supports 20 are carburized such that the predefined depth D defines an area of overlap between the exposed surfaces of the supports 20, ensuring the ribs 21 associated with the supports 20 are fully carburized. Generally, the predefined depth D is about 200 micrometers. At 208, optionally, the conformal cathode 52a may be inserted into the carburized component 22 and/or the carburized supports 24 to assist in the etching of the carburized component 22 and/or the carburized supports 24. At 210, the carburization layer 42 is removed with the etch system 16 to remove the carburized supports 24 completely and enhance the surface finish of the external surface 34 of the resulting component 26. The etching self-terminates once the carburization layer 42 is removed and the method ends at 212.

In one example, with reference to FIG. 11A and additional reference to FIG. 1, a flowchart illustrates a method 250 that can be performed for surface finish enhancement of a cast component in accordance with the present disclosure. As can be appreciated in light of the disclosure, the order of operation within the method is not limited to the sequential execution as illustrated in FIG. 11A, but may be performed in one or more varying orders as applicable and in accordance with the present disclosure.

The method begins at 252. At 252, the cast component 18' is formed, via investment casting, for example. At 256, the cast component 18' is carburized in the carburization system 14 to form the carburization layer 42' on the exposed surfaces (internal and external) of the cast component 18' to the predefined depth D. Generally, the predefined depth D is about 200 micrometers. At 258, optionally, the conformal cathode 52a may be inserted into the carburized component 22' to assist in the etching of the carburized component 22'. At 260, the carburization layer 42' is removed with the etch system 16 to enhance the surface finish of the exposed surfaces of the resulting component 26'. The etching self-terminates once the carburization layer 42' is removed and the method ends at 262.

Thus, the system 10 and the method 200 of the present disclosure provide additive manufacturing support removal and surface finish enhancement of the component 26. The system 10 and the method 250 of the present disclosure provide surface finish enhancement of the component 26', which reduces a likelihood of debris or fine dust particles adhering to or clogging internal passages defined in the component 26'. By carburizing the built component 18 and etching the carburized component 22 and the carburized supports 24, the supports 20 are completely removed from the component 26 without requiring labor intensive chemical slurries, the release of toxic by-products or machining. The system 10 and method 200 also enable the removal of supports 20 that are formed within the blind cavities or internally within the built component 18 without requiring complex machining. Thus, the system 10 and the method 200 enable the removal of supports 20 within the built component 18 that are not within a light of sight. In addition, the use of the conformal cathode 52a increases the rate of the etching by the etch system 16 by enabling the cathode to be positioned within the carburized component 22 and/or carburized supports 24, or the carburized component 24'. Moreover, by carburizing and etching the built component 18, or the cast component 18', the surface finish of the component 26, or the component 26', is improved and loosely attached particles are removed without requiring further machining. Thus, the system 10 and the method 200, 250 reduce manufacturing complexity, manufacturing cost and manufacturing time associated with additive manufactured or cast components.

### EXAMPLE

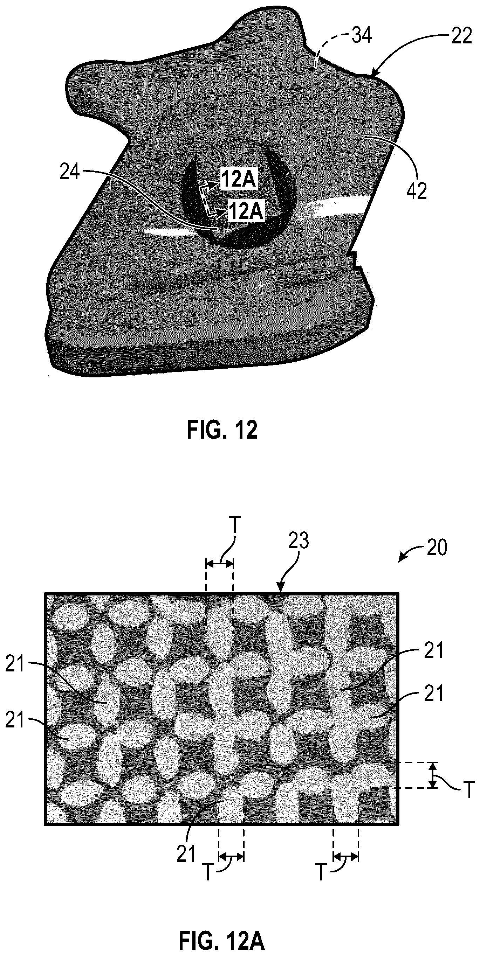

With reference to FIGS. 2 and 3, the built component 18 is shown with the support 20. The built component 18, including the support 20, was carburized in the carburization furnace 40 to form the carburization layer 42. FIG. 12 is a photographic image that shows the carburized component 22 with the carburization layer 42 on the external surface 34. As shown, the carburization layer 42 covers an entirety of the carburized component 22, including the internal surfaces of the arched hollow tube and the carburized supports 24. In this example, the built component 18 was carburized in a tube furnace for 8 hours, at 1050 degrees Celsius in a mixture of argon methane (Ar-CH4) gas and hydrogen methane (H₂-CH₄) gas. In this example, the volumetric flow rate of the argon methane and the hydrogen methane in the carburization furnace 40 was one liter (L) per minute (min). The carburization of the built component 18 was performed in two consecutive runs, for a period of 1.5 hours at 1050 degrees Celsius and 6.5 hours at 1050 degrees Celsius, respectively.

In this example, the support 20 was thicker than 200 micrometers (µm), and thus, additional time was needed to fully carburize the support 20. The support 20 was about 200 micrometers (µm) to 250 micrometers (µm) thick, and a photographic detail cross-sectional view of the support 20 is shown in FIG. 12A. In certain regions of the built component 18, the supports 20 may merge, which results in thicker walls, as shown in FIG. 12A.

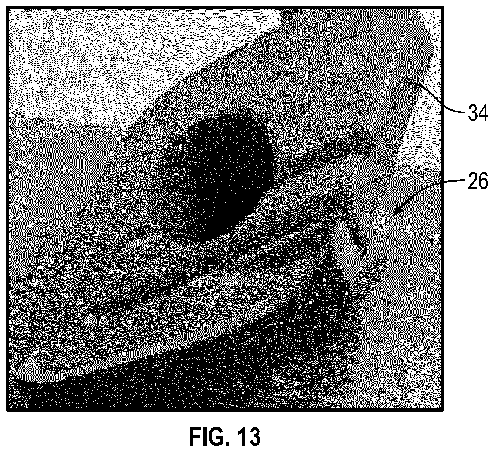

Once carburized (as shown in FIG. 12), the carburized component 22 with the carburized supports 24 was transferred to the etch system 16. The carburized component 22 was submerged within the electrolytic bath 54, which in this example, contains the electrolytic solution 72 of 0.48 molar nitric acid (HNO₃) and 0.1 molar potassium chloride (KCl) dissolved in water. In this example, the volume of the electrolytic solution 72 was 2.0 liters (L), and the bath was agitated with a magnetic stir bar that rotated at 900 revolutions per minute (rpm). The ambient temperature of the etch system 16 was at 23 degrees Celsius. The cathodes 52 were composed of Inconel 718, and were U-shaped rectangular sheets that were positioned over the bath so as to be partially submerged in the electrolytic solution 72. The carburized component 22 was suspended in the bath with a nichrome wire to form the anode. The voltage applied was 0.8 volts (V), and the voltage was controlled such that once the current went to zero, the voltage was decreased in 0.1 volt (V) increments over a period of 70 hours until no current flowed at 0.1 volts (V) (as the etch process self-terminates). In this example, the etch process self-terminated after 70 hours. At the end of the etch process, as discussed with regard to FIG. 9, the surface roughness (Ra) was reduced by 53%, and as shown in FIG. 13, the support 20 was completely removed. FIG. 13 is a photographic image of the component 26, in which after etching the carburized component 22 (FIG. 12) by the etch system 16, the carburized support 24 (FIG. 12) was completely removed. It should be understood that the carburized component 22 shown in FIG. 12 is the same built component 18 as shown in FIGS. 2 and 3 after the built component 18 has undergone carburization by the carburization system 14.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A method for additive manufacturing support removal of an additive manufactured component, comprising:
additively manufacturing a built component including at least one support having a thickness;
gaseous carburizing the built component and the at least one support to form a carburized component and at least one carburized support, each of the carburized component and the at least one carburized support having a carburization layer with a predefined depth; and
removing the carburization layer to form the component devoid of the at least one carburized support.

2. The method of Claim 1, wherein the removing the carburization layer to form the component further comprises:
etching the carburization layer in an etch system to remove the carburization layer and form the component devoid of the at least one carburized support.

3. The method of Claim 2, wherein the etching the carburization layer in the etch system, further comprises:
etching the carburization layer in an anodic etch system to form the component devoid of the at least one carburized support.

4. The method of Claim 3, further comprising:
inserting a conformal cathode electrode into at least one of the carburized component and the at least one carburized support prior to the etching.

5. The method of Claim 1, wherein the predefined depth is greater than the thickness of a rib associated with the at least one support.

6. The method of Claim 1, wherein the additively manufacturing the built component further comprises:
additively manufacturing a built component composed of at least 10% by weight chromium.

7. The method of Claim 1, wherein the carburizing the built component and the at least one support to form the carburized component and the at least one carburized support further comprises:
heating the built component and the at least one support in a carburization furnace that includes a carbon-containing gas at a temperature between 800 degrees Celsius to 1150 degrees Celsius to form the carburization layer with the predefined depth.

8. The method of Claim 1, wherein the built component has a first surface finish and the component has a second surface finish that is less than the first surface finish, and the method further comprises:
removing the carburization layer to form the component devoid of the at least one carburized support and with the second surface finish.

9. A system for additive manufacturing support removal and for surface finish enhancement of a component, comprising:
a source of an additively manufactured built component that includes at least one support;
a gaseous carburization system that carburizes the built component and the at least one support to form a carburized component and at least one carburized support, each of the carburized component and the at least one carburized support having a carburization layer with a predefined depth; and
an etch system that removes the carburization layer to form the component devoid of the at least one carburized support.

10. The system of Claim 9, wherein the etch system is an anodic etch system that includes an electrolytic bath that receives the carburized component and the at least one support, a cathode electrode and an anode electrode, and the carburized component is the anode electrode.

11. The system of Claim 10, wherein the cathode electrode is a conformal electrode that is insertable into at least one of the carburized component and the at least one carburized support prior to the etching, and the conformal electrode includes a cathode electrode wire that is at least partially surrounded by an insulator.

12. The system of Claim 11, wherein the insulator comprises a tube having a plurality of openings that expose the cathode electrode wire within the electrolytic bath.

13. The system of Claim 11, wherein the insulator comprises a plurality of discrete insulators that are spaced apart along a length of the cathode electrode wire.

14. The system of Claim 9, wherein the predefined depth is greater than a thickness of a rib associated with the at least one support and the built component is composed of at least 10% by weight chromium.

15. The system of Claim 9, wherein the built component has a first surface finish and the component has a second surface finish that is less than the first surface finish.
